# EUROPÄISCHE PATENTANMELDUNG

(11) **EP 0 574 376 A1**
(43) Veröffentlichungstag der Anmeldung: **15.12.1993**
(21) Anmeldenummer: 93890116.2
(22) Anmeldetag: 09.06.1993
(51) Int. Cl.: B23B 51/04

(54) **Schneideinsatz für ein spanabhebendes Metallbearbeitungswerkzeug sowie mit diesem ausgerüstetes Bohrwerkzeug**

(30) Priorität: 12.06.1992 AT 1211/92
(71) Anmelder: BÖHLERIT G.m.b.H. & Co. KG, A-8605 Kapfenberg (AT)
(72) Erfinder: Lackner, Egon, A-8605 Kapfenberg (AT); Maier, Wolfgang, A-8605 Kapfenberg (AT)
(74) Vertreter: Brauneiss, Leo, Dipl.Ing.

(57) **Zusammenfassung**

Die vorliegende Erfindung befaßt sich mit einem Schneideinsatz für ein spanabhebendes Metallbearbeitungswerkzeug, insbesondere für ein Bohrwerkzeug, sowie mit einem Bohrwerkzeug für eine Einbringung von Bohrungen in metallisches Vollmaterial. Zur Verbesserung der Abspanung und des Spanaustrages ist erfindungsgemäß vorgesehen, daß, in Achsrichtung des Befestigungsloches gesehen, die äußere Begrenzung des Schneideinsatzes (1) mindestens einen geradlinigen (3) und mindestens einen gekrümmten (4) die Schneidkanten bildenden Bereich aufweist. Im Bohrwerkzeug ist der äußere Schneideinsatz (1) geneigt mit einem sich nach vorne öffnenden Winkel (α_{A}) von 2,0 bis 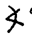 ° und der radial versetzte Schneideinsatz (1) angepaßten Winkel im Bereich von 0 bis 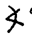 ° derart angeordnet, daß die radialen Schnittkraftkomponenten insgesamt ausgeglichen sind.

## Beschreibung

Die Erfindung betrifft einen Schneideinsatz für ein spanabhebendes Metallbearbeitungswerkzeug, insbesondere für ein Bohrwerkzeug, mit einer oberen, teilweise zumindest eine Schneidkante bildenden Fläche und einer ein geringeres Ausmaß aufweisenden, im wesentlichen zur oberen Fläche parallelen unteren Fläche bzw. einer Auflagefläche und mindestens einem im wesentlichen zu diesen Flächen senkrechten Loch für ein Befestigungsmittel. Weiters bezieht sich die Erfindung auf ein Bohrwerkzeug für eine Einbringung von Bohrungen in metallisches Vollmaterial mit einem Schaft, welcher stirnseitig, vorzugsweise um gleiche Umfangswinkel gegeneinander versetzt, mindestens zwei auswechselbare Schneideinsätze mit unterschiedlichem Abstand zur Bohrwerkzeug-Drehachse aufweist, wobei ein Ausgleich der radialen Schnittkräfte gegeben ist.

Bekannte Schneideinsätze weisen in der Draufsicht, also in Richtung des Befestigungsloches gesehen, Formen auf, bei welchen die in der oberen Fläche liegende(n) Schneidkante(en) mit geringen Eckenrundungen gegebenenfalls in mehreren Teilabschnitten im wesentlichen geradlinig verläuft (verlaufen). Bei vielen Einsätzen ist in der Mitte der Schneidkante bzw. der Kantenerstreckung ein stumpfwinkeliger Knick ausgebildet. Es sind auch in der Draufsicht kreisrunde Schneideinsätze mit einer umlaufenden bzw. ununterbrochenen Schneidkante und einem zentrischen Befestigungsloch bekannt.

Bei Bohrwerkzeugen erfolgt durchwegs eine Verwendung von Einsätzen bzw. Wendeschneidplatten mit zumindest in Teilabschnitten geradlinigem Schneidkantenverlauf.In der EP-B-0054913 wird beispielsweise ein Bohrwerkzeug offenbart, welches zwei Wendeschneidplatten aufweist, die im wesentlichen sechseckig sind, wobei die jeweils im Eingriff stehenden Schneidkanten einen Winkel von 160 einschließen. Damit kann erreicht werden, daß sich durch eine bestimmte Anbringung der Schneidplatten die radialen Schnittkomponenten der in Eingriff stehenden Schneidkanten für jede einzelne Wendeschneidplatte ausgleichen. Aus der EP-B-0181844 ist ein Schneideinsatz für ein Bohrwerkzeug bekannt, welcher in der Ansicht von oben eine etwa rechteckige Kontur hat, wobei die geradlinigen Schneidkanten in der Mitte ihrer jeweiligen Längserstreckung Bruch- bzw. Knickstellen haben. Die äußeren Eckenrundungsbereiche sind dabei vorspringend ausgebildet, damit der im Bohrwerkzeug schräg angeordnete Schneideinsatz eine Ausbildung von möglichst glatten Bohrungsinnenflächen ermöglicht. Ein Bohrwerkzeug mit im wesentlichen dreieckigen und in den geraden Schneidkanten Knickstellen aufweisenden Umsetzschneidplatten ist aus der DE- C- 2808866 bekannt. Die Schneidplatten sind dabei mit unterschiedlich großer, geometrisch ähnlicher Form ausgebildet. Alle Bohrwerkzeuge haben jedoch das Problem des Spanaustrages aus dem Bohrloch gemeinsam. Insbesondere bei der Einbringung von Bohrlöchern in Werkstücke aus zähfestem und/oder duktilem Werkstoff bilden sich an den Schneidkanten der Schneideinsätze lange , oft wendelförmige Späne. Ein Verspreizen der gebildeten Späne im Bohrloch und ein Eindringen oder Eindrücken von Spanmaterial in den Spalt zwischen Bohrungswand und rotierendem Werkzeugschaft kann dabei zu einem Festreiben des Werkzeuges führen.
Zur Lösung dieses Problems wurde schon versucht, die Kühlflüssigkeitsmenge zu vergrößern und damit den Spanaustrag zu intensivieren, was sich jedoch als aufwendig, belästigend und nicht immer in ausreichendem Maße wirksam herausstellte. Weiters werden gelegentlich rechtsfortschreitend wendelförmige Spankehlen im Werkzeug vorgesehen, um,durch die Drehbewegung des Bohrers unterstützt,einen verbesserten Austrag von Spanmaterial aus dem Bohrloch zu erreichen. Diese Maßnahmen sind bei im wesentlichen kurzbrechenden Spänen vorteilhaft anwendbar, bei langspanenden Materialien muß in manchen Fällen ein oftmaliges Spanbrechen durch eine Verminderung oder Unterbrechung des Werkzeugvorschubes vorgenommen werden, was nicht nur wirtschaftlich sondern oftmals auch im Hinblick auf die Bohrungswandung geometrische Nachteile mit sich bringt.

Hier will die Erfindung Abhilfe schaffen und setzt sich zum Ziel, Schneideinsätze zu erstellen, welche auch beim kontinuierlichen Bearbeiten von zähelastischen Materialien einen Abtrag mittels kurz brechender Späne ermöglicht. Ferner ist es Aufgabe der Erfindung, ein neues und verbessertes Bohrwerkzeug zu schaffen, mit welchem mit hoher Wirtschaftlichkeit und Genauigkeit in metallisches Vormaterial bei einer Bildung von kurzen, leicht austragbaren Spänen Bohrungen eingebracht werden können. Weiters ist bei einem Bohrwerkzeug der eingangs genannen Art ein möglichst großer Bereich an Bohrdurchmessern mit einer geringen Anzahl unterschiedlich großer Schneideinsätze abzudecken.

Erfindungsgemäß wird dies bei einem Schneideinsatz dadurch erreicht, daß in Achsrichtung des Befestigungsloches gesehen, die äußere Begrenzung des Schneideinsatzes mindestens einen geradlinigen Bereich und mindestens einen von einer Geradlinigkeit abweichenden bzw. gekrümmten, die Schneidkanten bildenden Bereich aufweist. Geradlinige oder teilweise geradlinig verlaufende Schneidkanten führen zu einer Spanausformung, bei welcher der Span eingedreht ist und gegebenenfalls Wendeln bilden kann. Dies ist auf eine im wesentlichen zweidimensionale plastische und elastische Materialverformung bei einer flachen Spanabnahme gemäß dem Stand der Technik zurückzuführen. Erfolgt nun eine Spanabnahme erfindungsgemäß unter Verwendung gekrümmter Schneidkanten des Schneideinsatzes, so bilden sich, geometrisch bedingt, im Spanmaterial im wesentlichen dreidimensionale vergrößerte spezifische Beanspruchungen aus, wodurch das Verformungsvermögen des Werkstoffes eher erschöpft werden kann, was zu Brüchen führt, so daß Späne mit kleinen kugelähnlichen Formen , die leicht aus dem Bohrloch austragbar sind, gebildet werden.

Als besonders vorteilhaft hat sich dabei herausgestellt, wenn der die Schneidkante bildende, von einer Geradlinigkeit abweichende bzw. gekrümmte Bereich aus einem eine Bogenlänge von mindestens 0,5, vorzugsweise mindestens 0,65, insbesondere größer als 0,8 mal die Schneidkantengesamterstreckung des Schneideinsatzes aufweisenden Hauptbereich und in diesen insbesondere verlaufend übergehende Eckenrundungsbereiche besteht und der Hauptbereich eine Krümmung mit einem Radius oder mit mehreren ineinander übergehenden Radien von 0,75 bis 1,4, vorzugsweise 0,8 bis 1,3, insbesondere von 0,9 bis 1,2, mal die Schneidkantengesamtersteckung bzw. Schneidkanten- länge aufweist. Dadurch können, wahrscheinlich wirkungstechnisch bedingt, einheitlich kleine, leicht bewegbare Spanformen erreicht werden.

Wenn, gemäß einer bevorzugten Form, der (die) Krümmungsradius (radien) des Hauptbereiches der Schneidkante einen außermittig angeordneten Mittelpunkt mit einem Abstand zur Schneideinsatzlängsachse von 0,1 bis 0,26, vorzugsweise 0,13 bis 0,23, insbesondere von 0,15 bis 0,19, mal der Schneidkantenlänge des Schneideinsatzes aufweist, so kann bei Verwendung gleich großer Schneideinsätze ein großer Bereich an Bohrungs- bzw. Bohrdurchmessern abgedeckt werden.

Im Sinne einer zweiseitigen Verwendung hat sich weiters als günstig erwiesen, wenn in Achsrichtung des Befestigungsloches in Befestigungrichtung gesehen, der Umriß des Schneideinsatzes eine rechtsgeneigt parallelogrammähnliche Gestalt hat, wobei zwei im wesentlichen parallele Begrenzungslinien im wesentlichen gerade und die beiden übrigen zumindest teilweise die Schneidkanten bildenden Begrenzungslinien eine gekrümmte Form aufweisen. Eine Spanabtragung kann gefördert werden, wenn anschließend an die Schneidkante(n) in der oberen Fläche des Schneideinsatzes eine Spanformernut bzw. Spanformermulde mit einer Breite von 0,5 bis 2 mm, vorzugsweise von etwa 1 mm, und einer Tiefe von 0,0, d.h. mit einem Spanwinkel von 0 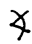 °, bis 1 mm, vorzugsweise von etwa 0,1 mm, an- bzw. eingeformt ist.

Bei dieser Ausbildung ist von besonders günstiger Wirkung, wie im übrigen gefunden wurde, wenn die Spanformermulde(n) im wesentlichen kalottenförmige Vertiefungen aufweist(en) oder aus diesen besteht(en), wobei deren Anzahl einem ganzzahligen Wert innerhalb des Bereiches von 0,60 bis 0,8, insbesondere von 0,65 bis 0,75, mal der Schneidkantenlänge und deren Durchmesser einen Wert im Bereich von 0,5 bis 0,7 mal der Schneidkantenlänge gebrochen durch die Anzahl der Vertiefungen entspricht.

Erfindungsgemäß wird ein Bohrwerkzeug für eine Einbringung von Bohrungen in metallisches Vollmaterial dadurch geschaffen, daß die oberen, die gekrümmten Schneidkanten aufweisenden Flächen der Schneideinsätze bzw. Schneideinsatzpaare gegeneinander einen planparallelen Abstand von 0,05 bis 0,8 mm, vorzugsweise von 0,3 bis 0,5 mm, aufweisen und der äußere oder äußerste Schneideinsatz zur Bohrerachse derart geneigt ist, daß ein sich nach vorne öffnender spitzer Winkel von 2,0 bis 12 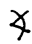 ° zwischen der äußeren geraden Begrenzungslinie des Schneideinsatzes und der Bohrerachse gebildet ist und daß der (die) weitere(n) Schneideinsatz(einsätze) radial versetzt mit einem sich ebenfalls nach vorne öffnenden Winkel der geraden Begrenzungslinien zur Bohrerachse im Bereich von 0 bis 14 derart geneigt angeordnet ist (sind), daß die radialen Schnitt- kraftkomponenten der Schneideinsätze insgesamt ausgeglichen sind.

Besonders einfach und vorteilhaft wird dies erreicht, wenn die an den von den vorderen distalen Punkten der Schneideinsätze nach außen gerichteten, im spanabhebenden Eingriff stehenden gekrümmten Schneidkanten des Werkzeuges gebildeten Radialkräfte bei im wesentlich allen Bohrervorschüben insgesamt gleich groß und entgegengesetzt sind.

Im folgenden wird die Erfindung mittels je eines Ausführungsbeispieles für einen Schneideinsatz und ein Bohrwerkzeug anhand von Zeichnungen näher erläutert.

Es zeigen
- Fig. 1: einen parallelogrammförmigen Schneideinsatz
- Fig. 2: einen stirnseitig mit Schneideinsätzen versehenen Schaft eines Bohrwerkzeuges in Ansicht
- Fig. 3: einen mit Schneideinsätzen bestücktes Schaftende in Draufsicht

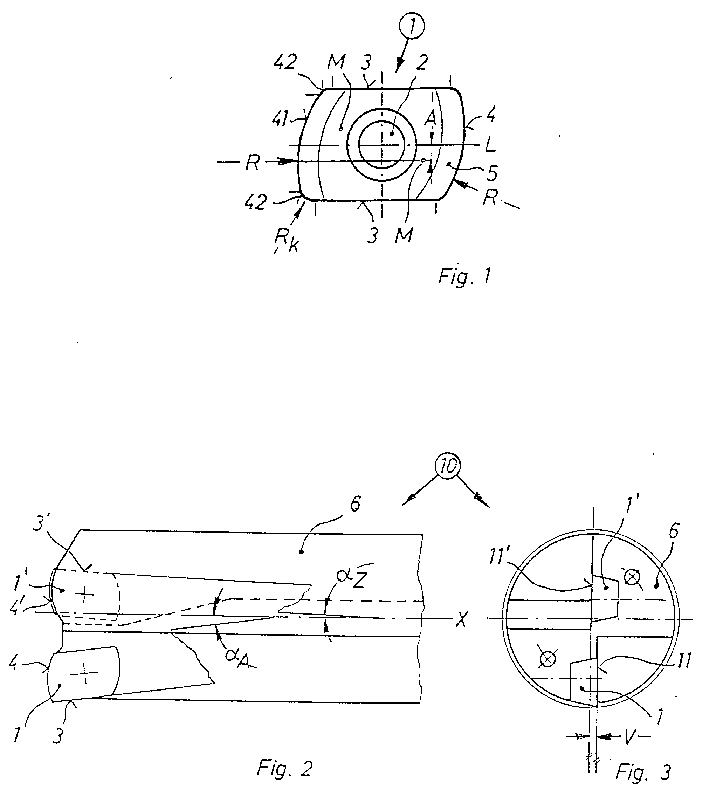

In Fig. 1 ist ein Schneideinsatz mit in der Draufsicht parallelogrammartigem Umriß dargestellt. Die parallel zur Längsachse L verlaufenden Begrenzungen 3 sind geradlinig, wogegen die beiden Schneidkanten 4 eine gekrümmte Form aufweisen. Dabei wird die Krümmung der Schneidkanten 4 jeweils aus einem kreisbogenförmigen Hauptbereich 41 mit zwei daran verlaufend anschließenden, in die geradlinigen Bereiche 3 übergehenden Eckenrundungsbereiche 42 gebildet. Für eine dreidimensionale Ausbildung der Verformung bzw. der Spannungen im Span und somit für eine Kurzspanbildung bzw. ein Spanbrechen ist es wichtig, daß die Krümmung bzw. der Kreisbogenradius R innerhalb eines bestimmten von der Schneidkantenlänge 4 abhängigen Bereiches liegt. Der gekrümmte Schneidkanten-Hauptbereich 41 kann auch von mehreren unterschiedlich großen ineinander übergehenden Kreisbögen gebildet werden, es müssen jedoch dabei sämtliche Radien innerhalb des erfindungsgemäßen Bereiches liegen. Die Mittelpunkte M der Kreisbogenradien R befinden sich außermittig, das heißt, sie besitzen einen im erfindungsgemäßen Bereich liegenden Abstand A zur Längsachse L des Schneideinsatzes 1, wodurch ein im wesentlichen parallelogrammförmiger Umriß mit einem Neigungswinkel zwischen etwa 80 und 85 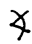 ° gebildet ist. Dieser Neigungswinkelbereich ist wichtig und ermöglicht die Verwendung einer Schneideinsatzgröße für Bohrwerkzeuge mit großem Durchmesserunterschieden. Die Eckenrundungsbereiche 42, welche einen Radius R_{K} von 0,03 bis 0,15 mal den Kreisbogenradius R aufweisen, sind integriert, also nicht vorspringend, ausgebildet, wodurch eine besondere Stabilität der Schneidkantenendzonen, die oft Stoßbelastungen ausgesetzt sind, erreicht werden kann. Anschließend an die Schneidkanten 4 des Schneideinsatzes 1 sind in die obere Fläche 11 an sich bekannte Spanformernuten oder Spanformermulden 5 eingeformt, welche mit einer erfindungsgemäßen Geometrie günstig mit den gekrümmten Schneidkanten zusammenwirken. Besonders synergetisch vorteilhaft ist, wenn die Spanformermulden 5 kalottenförmige Vertiefungen aufweisen oder aus diesen gebildet sind. Untersuchungen haben überraschend gezeigt, daß nur bei bestimmten geometrischen Bedingungen herausragend gute Spanabtragungs- und Spanbrucheigenschaften erreichbar sind. Dabei wurden bei Schneideinsätzen 1 mit einer Schneidkantenlänge 4 von 6,1 mm und 6,7 mm anschließend an die Kanten 3,4,5 und 6 Kalotten in die obere Fläche eingeformt, damit Bohrwerkzeuge ausgerüstet und vergleichende Bohrversuche durchgeführt. Die Benotung ( beste Gesamtleistung des Werkzeuges bei gleichem Spanaustrag aus der Bohrung: Note 1- schlechteste Gesamtbewertung: Note 5) erbrachte folgende Resultate:

| Schneidkantenlänge (mm) | Kalottenanzahl | Ergebnis ( Note) |
|---|---|---|
| 6,1 | 3 | 4,0 |
| | 4 | 1,5 |
| | 5 | 3,1 |
| | 6 | 3,5 |
| 6,7 | 3 | 3,9 |
| | 4 | 4,2 |
| | 5 | 1,4 |
| | 6 | 3,6 |

In Fig. 2 und Fig. 3 ist ein Teil eines Schaftes 10 eines Bohrwerkzeuges mit Schneideinsätzen 1 und 1 dargestellt. Der von der Bohrerlängsachse X radial weiter entfernte, beim Bohren die Bohrungswand erstellende Schneideinsatz 1 ist schräg mit einem Winkelα_{A} zwischen seiner geraden äußeren Begrenzung und der Bohrerlängsachse in der Stirnseite des Schaftes 6 derart eingesetzt, daß die die gekrümmte Schneidkante 4 beinhaltende Oberfläche 11 planparallel zu jener 11' des weiteren Schneidkanteneinsatzes 1 gegen die Drehrichtung des Werkzeuges einen Abstand V aufweist. Der Winkelα_{A} stellt den Freiwinkel in Bohrervorschubrichtung dar und beträgt mindestens 2,5 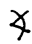 °, wobei durch den Abstand V der ebenflächige Freiwinkel des Einsatzes von beispielsweise 8 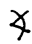 ° auf die geometrischen Anforderungen der zylinderförmigen Innenoberfläche der Bohrung an die Einsatzform angepaßt ist. Der sich ebenfalls nach vorne öffnende Neigungswinkel α_{z} des Schneideinsatzes 1' ist auf den Neigungswinkel α_{A}, die Schneideinsatzgeometrie und den Bohrungsdurchmesser derart abzustimmen, daß die radialen Schnittkräfte insgesamt bzw. auf den Schaft bezogen Null werden oder einen vernachlässigbar geringen Wert betragen. Diese Einstellung erfolgt derart, daß die distalen Punkte, das sind jene in Vorschubsrichtung des Werkzeuges am weitesten vorne rechtwinkelig zur Bohrerachse liegenden Punkte, der Schneidkanten 4 und 4' ermittelt werden und der innere Schneideinsatz 1 derart positioniert wird, daß die im Eingriff befindlichen Schneidkanten 4, 4', bezogen auf die distalen Punkte insgesamt gleich lange nach außen, also zur Bohrungswand weisende und nach innen zur Werkzeugachse X gerichtete Strecken aufweisen.

## Patentansprüche

1. Schneideinsatz (1) für ein spanabhebendes Metallbearbeitungswerkzeug, insbesondere für ein Bohrwerkzeug, mit einer oberen, teilweise zumindest eine Schneidkante bildenden Fläche und einer ein geringes Ausmaß aufweisenden, im wesentlichen zur oberen parallelen unteren Fläche bzw. einer Auflagefläche und mindestens einem im wesentlichen zu diesen Flächen senkrechten Loch für ein Befestigungsmittel, dadurch gekennzeichnet, daß in Achsrichtung des Befestigungsloches (2) gesehen, die äußeren Begrenzung des Schneideinsatzes mindestens einen geradlinigen Bereich (3) und mindestens einen von einer Geradlinigkeit abweichenden bzw. gekrümmten, die Schneidkanten bildenden Bereich (4) aufweist.

2. Schneideinsatz nach Anspruch 1, dadurch gekennzeichnet, daß der die Schneidkante bildende, von einer Geradlinigkeit abweichende bzw. gekrümmte Bereich (4) aus einem eine Bogenlänge von mindestens 0,5, vorzugsweise mindestens 0,65, insbesondere größer als 0,8, mal die Schneidkantengesamterstreckung des Schneideinsatzes aufweisenden Hauptbereich (41) und in diesen insbesondere verlaufend übergehende Eckenrundungsbereiche (42) besteht und der Hauptbereich (41) eine Krümmung mit einem Radius R oder mit mehreren ineinander übergehenden Radien von 0,75 bis 1,4, vorzugsweise von 0,8 bis 1,3, insbesondere von 0,9 bis 1,2, mal die Schneidkantengesamterstreckung bzw. Schneidkantenlänge (4) aufweist.

3. Schneideinsatz nach einem der Ansprüche 1 oder 2, dadurch gekennzeichnet, daß der (die) Krümmungsradius (radien) (R) des Hauptbereiches (41) der Schneidkante (4) einen außermittig angeordneten Mittelpunkt (M) mit einem Abstand (A) zur Schneideinsatzlängsachse (L) von 0,1 bis 0,26, vorzugsweise von 0,13 bis 0,23, insbesondere von 0,15 bis 0,19, mal der Schneidkantenlänge des Schneideinsatzes aufweist.

4. Schneideinsatz nach Anspruch 1 bis 3, dadurch gekennzeichnet, daß, in Achsrichtung des Befestigungsloches (2) in Befestigungsrichtung gesehen, der Umriß des Schneideinsatzes eine rechtsgeneigt parallelogrammähnliche Gestalt hat, wobei zwei im wesentlichen parallele Begrenzungslinien (3) im wesentlichen gerade und die beiden übrigen zumindest teilweise die Schneidkanten bildenden Begrenzungslinien (4) eine gekrümmte Form aufweisen.

5. Schneideinsatz nach einem der Ansprüche 1 bis 4, dadurch gekennzeichnet, daß anschließend an die Schneidkante(n) (4) in der oberen Fläche (11) eine Spanformernut (5) bzw. Spanformermulde mit einer Breite von 0,5 bis 2 mm, vorzugsweise von etwa 1 mm, und einer Tiefe von 0,0,d.h. mit einem Spanwinkel von 0 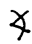 °, bis 1 mm, vorzugsweise von etwa 0,1 mm, an- bzw. eingeformt ist.

6. Schneideinsatz nach einem der Ansprüche 1 bis 5, dadurch gekennzeichnet, daß die Spanformermulde(n) (5) im wesentlichen kalottenförmige Vertiefungen aufweist(en) oder aus diesen besteht(en), wobei deren Anzahl einem ganzzahligen Wert innerhalb des Bereiches von 0,60 bis 0,8 mal der Schneidkantenlänge (4) und deren Durchmesser einen Wert im Bereich von 0,5 bis 0,7 mal der Schneid- kantenlänge (4) gebrochen durch die Anzahl der Vertiefungen entspricht.

7. Bohrwerkzeug (10) für eine Einbringung von Bohrungen in metallisches Vollmaterial mit einem Schaft (6), welcher stirnseitig, vorzugsweise um gleiche Umfangswinkel gegeneinander versetzt, mindestens zwei auswechselbare Schneideinsätze (1,1'), wie sie in den vorstehenden Ansprüchen gekennzeichnet sind, mit unterschiedlichem Abstand zur Bohrwerkzeug-Drehachse (X) aufweist, wobei ein Ausgleich der radialen Schnittkräfte gegeben ist, dadurch gekennzeichnet, daß die oberen, die gekrümmten Schneidkanten aufweisenden Flächen ( 11, 11') der Schneideinsätze ( 1, 1') bzw. Schneideinsatzpaare gegeneinander einen planparallelen Abstand ( V) von 0,05 bis 0,8, vorzugsweise von 0,3 bis 0,5, mm aufweisen und der äußere oder äußerste Schneideinsatz (1) zur Bohrerachse (X) derart geneigt ist, daß ein sich nach vorne öffnender spitzer Winkel (α_{A}) von 2,0 bis 12 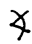 °, zwischen der äußeren geraden Begrenzungslinie (3) des Schneideinsatzes (1) und der Bohrerachse (X) gebildet ist und daß der (die) weitere(n) Schneideinsatz(einsätze) (1') radial versetzt mit einem sich ebenfalls nach vorne öffnenden Winkel (α_{z}) der geraden Begrenzungslinien ( 3') zur Bohrerachse ( X) im Bereich von 0 bis 14 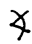 ° derart geneigt angeordnet ist (sind), daß die radialen Schnittkraftkomponenten der Schneideinsätze insgesamt ausgeglichen sind.

8. Bohrwerkzeug nach Anspruch 7, dadurch gekennzeichnet, daß die an den von den vorderen distalen Punkten der Schneideinsätze ( 1, 1') nach außen gerichteten und die von diesen Punkten nach innen zur Bohrerachse (X) gerichteten, im spanabhebenden Eingriff stehenden gekrümmten Schneidkanten (4, 4') des Werkzeuges (10) gebildeten Radialkräfte bei im wesentlichen allen Bohrervorschüben insgesamt gleich groß und entgegengesetzt gerichtet sind.

9. Schneideinsatz (1), insbesondere nach einem der Ansprüche 1 bis 8, für ein spanabhebendes Metallbearbeitungswerkzeug, insbesondere für ein Bohrwerkzeug, mit einer oberen, teilweise zumindest eine Schneidkante bildenden Fläche und einer ein geringes Ausmaß aufweisenden, im wesentlichen zur oberen parallelen unteren Fläche bzw. einer Auflagefläche und mindestens einem im wesentlichen zu diesen Flächen senkrechten Loch für ein Befestigungsmittel, dadurch gekennzeichnet, daß in Achsrichtung des Befestigungsloches (2) gesehen, die äußere Begrenzung des Schneideinsatzes mindestens zwei geradlinige, zur Schneideinsatzlängsachse (L) im wesentlichen parallele Bereiche (3) und mindestens einen von einer Geradlinigkeit abweichenden bzw. gekrümmten, die Schneidkante(n) bildenden Bereich (4) aufweist.
